(19)

Europäisches Patentamt
European Patent Office
Office européen des brevets

(11) **EP 4 661 277 A1**

(12) **EUROPEAN PATENT APPLICATION**
published in accordance with Art. 153(4) EPC

(43) Date of publication:
**10.12.2025 Bulletin 2025/50**

(21) Application number: **24749956.9**

(22) Date of filing: **17.01.2024**

(51) International Patent Classification (IPC):
**H02M 7/48** (2007.01)          **H02P 27/06** (2006.01)

(52) Cooperative Patent Classification (CPC):
**H02M 7/48; H02P 27/06**

(86) International application number:
**PCT/JP2024/001135**

(87) International publication number:
**WO 2024/162002 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 JP 2023015667**

(71) Applicant: **DENSO CORPORATION
Kariya-city, Aichi 448-8661 (JP)**

(72) Inventors:
• **YAMADA, Tetsuya
  Nisshin-city Aichi 470-0111 (JP)**
• **SADA, Takeshi
  Kariya-city, Aichi 448-8661 (JP)**
• **HORIHATA, Harumi
  Kariya-city, Aichi 448-8661 (JP)**

(74) Representative: **TBK
Bavariaring 4-6
80336 München (DE)**

(54) **POWER FACTOR CONTROL DEVICE, POWER FACTOR CONTROL METHOD, AND POWER FACTOR CONTROL PROGRAM**

(57)      A power factor control apparatus includes: a phase detection unit configured to detect the phase of an output signal outputted from an inverter, which was originally used to supply electric power to a first electric power supply target, to a second electric power supply target that is different from the first electric power supply target and connected with the inverter and an inverter control apparatus for controlling the inverter; a correction amount calculation unit configured to calculate a phase correction amount based on a power factor command value that is a power factor required by the second electric power supply target; and a correction processing unit configured to generate, based on the phase detected by the phase detection unit and the phase correction amount calculated by the correction amount calculation unit, a power factor control signal for controlling the power factor of electric power supplied to the second electric power supply target and output the generated power factor control signal to the inverter control apparatus.

FIG.2

EP 4 661 277 A1

**Description**

[TECHNICAL FIELD]

The present disclosure relates to power factor control apparatuses, power factor control methods, and power factor control programs.

[CROSS-REFERENCE TO RELATED APPLICATION]

The present application is based on and claims the benefit of priority from Japanese Patent Application No. 2023-015667, filed on February 3, 2023, the entire contents of which are incorporated by reference into the present description.

[BACKGROUND ART]

Japanese Patent Application Publication No. JP 2009-044846 A discloses a motor drive control apparatus that vector-controls an electric motor, the number of phases of which is three or more, by a vector control unit. The motor drive control apparatus has an electrical angle detection means for detecting the electrical angle of the electric motor and an angular speed detection means for detecting the angular speed of the electric motor. The vector control unit includes: an advance angle calculation unit that calculates an advance angle based on the angular speed of the electric motor detected by the angular speed detection means and d-axis current; an electrical angle correction unit that corrects, with the advance angle calculated by the advance angle calculation unit, the electrical angle detected by the electrical angle detection means; and a control calculation unit that performs the vector control based on the electrical angle corrected by the electrical angle correction unit.

Japanese Patent Application Publication No. JP 2008-199868 A discloses a drive control apparatus for a permanent magnet synchronous motor. The drive control apparatus has: a current control means for controlling stator current, which contributes to torque generation, in a feedback or feedforward manner using a vector rotator or a converter with a built-in vector rotator; and a vector rotator phase determination means for determining the phase to be used for the vector rotator or the converter with the built-in vector rotator. Moreover, the vector rotator phase determination means includes: a power factor phase detection means for detecting a power factor phase equivalent value of terminal electric power of the permanent magnet synchronous motor; a power factor phase command means for generating a power factor phase command value; and a power factor phase control means for controlling and generating the phase to be used for the vector rotator or the converter with the built-in vector rotator in such a manner as to bring the power factor phase equivalent value into agreement with the power factor phase command value.

Japanese Patent Application Publication No. JP 2012-080776 A discloses a control apparatus for a synchronous machine having a field coil. The control apparatus includes: a magnetic pole position detection means for detecting a magnetic pole position of the synchronous machine and thereby detecting a rotor phase that represents the direction of magnetic flux; a speed detection means for detecting the rotational speed of the synchronous machine based on the change with time of the rotor phase; a field current detection means for detecting field current flowing through the field coil; a field voltage command calculation means for calculating a field voltage command based on both a field current command and the field current detected by the field current detection means; a field voltage application means for applying a field voltage to the field coil according to the field voltage command; an armature voltage application means for applying an armature voltage to an armature coil of the synchronous machine; and a control means for outputting the field current command to the field voltage command calculation means based on an armature current command, the rotational speed and the rotor phase of the synchronous machine and for outputting an armature voltage phase command to the armature voltage application means. Moreover, the control means calculates the field current command and the armature voltage phase command so that the power factor of the synchronous machine becomes a predetermined value.

[SUMMARY OF THE INVENTION]

[PROBLEMS TO BE SOLVED BY THE INVENTION]

To realize a circular economy, it is effective to reuse inverters, which were originally used for controlling the outputs of motors that drive, for example, hybrid vehicles and the like, as grid-connected inverters for connecting electric generators or storage batteries, which use renewable energy, to a power grid.

However, for an inverter for a motor that drives a vehicle, the power factor is uniquely determined by, for example, a torque command value for the motor; therefore, it is impossible to perform, using the inverter as it is, the power factor control required of a grid-connected inverter.

An object of the present disclosure is to provide a power factor control apparatus, a power factor control method and a power factor control program which can enable an existing inverter to be reused in other apparatuses.

[MEANS FOR SOLVING THE PROBLEMS]

According to a first aspect of the present disclosure, there is provided a power factor control apparatus comprising: a phase detection unit configured to detect the phase of an output signal outputted from an inverter, which was originally used to supply electric power to a first electric power supply target, to a second electric power supply target that is different from the first electric power supply target and connected with the inverter and an inverter control apparatus for controlling the inverter; a correction amount calculation unit configured to calculate a phase correction amount based on a power factor command value that is a power factor required by the second electric power supply target; and a correction processing unit configured to generate, based on the phase detected by the phase detection unit and the phase correction amount calculated by the correction amount calculation unit, a power factor control signal for controlling the power factor of electric power supplied to the second electric power supply target and output the generated power factor control signal to the inverter control apparatus.

According to a second aspect of the present disclosure, there is provided a power factor control method comprising the following steps executed by at least one processor: detecting the phase of an output signal outputted from an inverter, which was originally used to supply electric power to a first electric power supply target, to a second electric power supply target that is different from the first electric power supply target and connected with the inverter and an inverter control apparatus for controlling the inverter; calculating a phase correction amount based on a power factor command value that is a power factor required by the second electric power supply target; and generating, based on the detected phase and the calculated phase correction amount, a power factor control signal for controlling the power factor of electric power supplied to the second electric power supply target and outputting the generated power factor control signal to the inverter control apparatus.

According to a third aspect of the present disclosure, there is provided a power factor control program configured to cause at least one processor to execute processes comprising: detecting the phase of an output signal outputted from an inverter, which was originally used to supply electric power to a first electric power supply target, to a second electric power supply target that is different from the first electric power supply target and connected with the inverter and an inverter control apparatus for controlling the inverter; calculating a phase correction amount based on a power factor command value that is a power factor required by the second electric power supply target; and generating, based on the detected phase and the calculated phase correction amount, a power factor control signal for controlling the power factor of electric power supplied to the second electric power supply target and outputting the generated power factor control signal to the inverter control apparatus.

[ADVANTAGEOUS EFFECTS OF THE INVENTION]

According to the present disclosure, it becomes possible to achieve an advantageous effect of enabling an existing inverter to be reused in other apparatuses.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

FIG. 1 is a configuration diagram of an inverter control system according to a first embodiment;
FIG. 2 is a configuration diagram of an inverter control apparatus and a power factor control apparatus according to the first embodiment;
FIG. 3 is a diagram illustrating the correspondence relationship between a torque command value and current command values;
FIG. 4 is a diagram for explaining a phase correction amount;
FIG. 5 is a waveform chart of voltage and phase signals;
FIG. 6 is a diagram illustrating the hardware configuration of a power factor control apparatus according to a second embodiment;
FIG. 7 is a flowchart illustrating a power factor control process according to the second embodiment;
FIG. 8 is a configuration diagram of an inverter control apparatus and a power factor control apparatus according to a third embodiment;
FIG. 9 is a waveform chart of a phase signal, a ref wave, a sin wave and a cos wave;

FIG. 10 is a configuration diagram of an inverter control apparatus and a power factor control apparatus according to a fourth embodiment;

FIG. 11 is a configuration diagram of an inverter control apparatus and a power factor control apparatus according to a fifth embodiment; and

FIG. 12 is a diagram illustrating the relationship between a phase correction amount, a power factor measurement value and a power factor command value.

[EMBODIMENTS FOR CARRYING OUT THE INVENTION]

Hereinafter, embodiments for implementing the technology according to the present disclosure will be described in detail with reference to the drawings.

[First Embodiment]

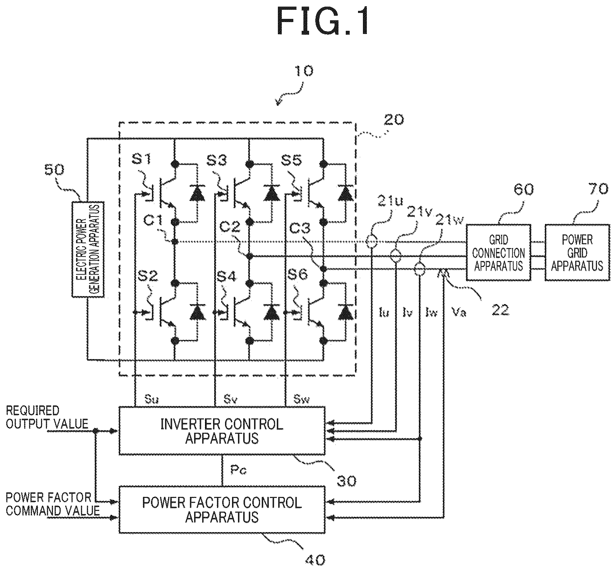

As shown in FIG. 1, an inverter control system 10 according to the present embodiment includes an inverter 20, an inverter control apparatus 30, and a power factor control apparatus 40.

The inverter 20 is an inverter which was originally used to drive a motor that drives a vehicle such as a hybrid vehicle, a plug-in hybrid vehicle, or an electric vehicle. In addition, a motor that drives a vehicle is an example of a first electric power supply target.

The inverter 20 is controlled by the inverter control apparatus 30. The inverter 20 and the inverter control apparatus 30 were originally installed in a vehicle and used to drive a motor that drives the vehicle.

In the present embodiment, the inverter 20 is not used to drive a motor that drives a vehicle, but is used to supply electric power to other electric power supply targets. Specifically, as shown in FIG. 1, the inverter 20 converts a DC voltage supplied from an electric power generation apparatus 50 into a three-phase AC voltage and supplies the three-phase AC voltage to a power grid apparatus 70 via a grid connection apparatus 60.

In addition, the electric power generation apparatus 50 may be, for example, an electric power generation apparatus that generates electric power using renewable energy such as solar energy, but is not limited thereto.

As above, in the present embodiment, the inverter 20 and the inverter control apparatus 30, which were originally used for a motor that drives a vehicle, are reused for supplying electric power to the power grid apparatus 70. In addition, the power grid apparatus 70 is an example of a second electric power supply target.

The inverter 20 includes, for example, six switching elements S1 to S6. The inverter 20 is configured so that a pair of serially-connected switching elements S1 and S2, a pair of serially-connected switching elements S3 and S4, and a pair of serially-connected switching elements S5 and S6 are connected in parallel with each other.

A junction point C1 between the switching elements S1 and S2 is connected to the grid connection apparatus 60. Similarly, a junction point C2 between the switching elements S3 and S4 is also connected to the grid connection apparatus 60; and a junction point C3 between the switching elements S5 and S6 is also connected to the grid connection apparatus 60.

Hereinafter, the switching elements S1 to S6 will be simply referred to as the switching elements S in situations where they are not distinguished from each other. Each of the switching elements S may be implemented by, for example, an IGBT (Insulated Gate Bipolar Transistor), but is not limited thereto.

The switching elements S are controlled by the inverter control apparatus 30. Specifically, the inverter control apparatus 30 controls the switching of the switching elements S1 and S2 by a switching control signal Su. Moreover, the inverter control apparatus 30 controls the switching of the switching elements S3 and S4 by a switching control signal Sv. Furthermore, the inverter control apparatus 30 controls the switching of the switching elements S5 and S6 by a switching control signal Sw.

The inverter 20 is supplied with a DC voltage from the electric power generation apparatus 50. The inverter control apparatus 30 converts the DC voltage supplied from the electric power generation apparatus 50 into a three-phase AC voltage by controlling the switching of each of the switching elements S1 to S6, and outputs the three-phase AC voltage to the grid connection apparatus 60.

Current values Iu, Iv and Iw of the three-phase AC current are detected respectively by current sensors 21u, 21v and 21w, and outputted to the inverter control apparatus 30. Moreover, at least one of the current values Iu, Iv and Iw detected respectively by the current sensors 21u, 21v and 21w is also outputted to the power factor control apparatus 40. In addition, in FIG. 1, there is shown, as an example, a configuration where the current value Iw detected by the current sensor 21w is outputted to the power factor control apparatus 40 as well as to the inverter control apparatus 30. Furthermore, the voltage outputted from the junction point C3 to the grid connection apparatus 60 is detected by a voltage sensor 22; and the voltage value Va of the detected voltage is outputted to the power factor control apparatus 40.

The power factor control apparatus 40 outputs a power factor control signal Pc for controlling the power factor to the inverter control apparatus 30 based on a required output value, i.e., a power command value, required for the electric power outputted by the power grid apparatus 70 and a power factor command value specifying a target power factor of the electric power outputted by the power grid apparatus 70.

In addition, as described above, the inverter 20 and the inverter control apparatus 30 were originally used to drive a motor of a vehicle; and the inverter control apparatus 30 was originally designed to have a torque command value of the motor inputted thereto as a required output value. Therefore, in the present embodiment, to the inverter control apparatus 30, there is imputed, as the required output value, a value obtained by converting the power command value (i.e., the required output value of the power grid apparatus 70) into the torque command value of the motor.

The inverter control apparatus 30 performs, based on the required output value, the current values Iu, Iv and Iw of the three-phase AC current and the power factor control signal Pc outputted from the power factor control apparatus 40, feedback control by controlling the switching of the switching elements S1 to S6 so as to have electric power outputted from the power grid apparatus 70 in accordance with the required output value and at a desired power factor.

Next, detailed configurations of the inverter control apparatus 30 and the power factor control apparatus 40 will be described.

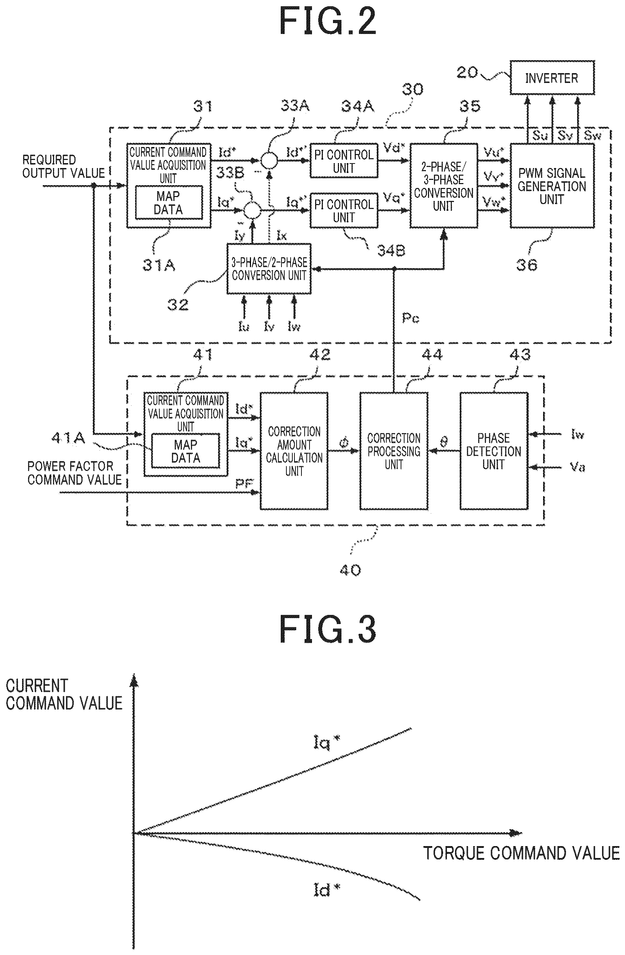

As shown in FIG. 2, the inverter control apparatus 30 includes a current command value acquisition unit 31, a three-phase/two-phase conversion unit 32, subtraction units 33A and 33B, PI control units 34A and 34B, a two-phase/three-phase conversion unit 35, and a PWM signal generation unit 36.

The current command value acquisition unit 31 has map data 31A stored therein. The map data 31A is table data indicating, for example as shown in FIG. 3, the correspondence relationship between the torque command value, which is the required output value of the vehicle motor to which the inverter 20 was originally connected, a d-axis current command value Id* and a q-axis current command value Iq*. The map data 31A is an example of first map data. In addition, the map data 31A may be rewritable from an external apparatus.

The current command value acquisition unit 31 acquires the d-axis current command value Id* and the q-axis current command value Iq*, both of which correspond to the required output value inputted from a superordinate apparatus (not shown), by referring to the map data 31A. Then, the current command value acquisition unit 31 outputs the d-axis current command value Id* to the subtraction unit 33A, and outputs the q-axis current command value Iq* to the subtraction unit 33B.

The three-phase/two-phase conversion unit 32 converts the three-phase current values Iu, Iv and Iw into two-phase current values Ix and Iy based on the current values Iu, Iv and Iw detected respectively by the current sensors 21u, 21v and 21w and the power factor control signal Pc inputted from the power factor control apparatus 40 that will be described later. Then, the three-phase/two-phase conversion unit 32 outputs the two-phase current values Ix and Iy respectively to the subtraction units 33A and 33B.

The subtraction unit 33A outputs a d-axis current command value Id*', which is obtained by subtracting the current value Ix outputted from the three-phase/two-phase conversion unit 32 from the d-axis current command value Id* inputted from the current command value acquisition unit 31, to the PI control unit 34A.

The subtraction unit 33B outputs a q-axis current command value Iq*', which is obtained by subtracting the current value Iy outputted from the three-phase/two-phase conversion unit 32 from the q-axis current command value Iq* inputted from the current command value acquisition unit 31, to the PI control unit 34B.

The PI control unit 34A converts the d-axis current command value Id*' inputted from the subtraction unit 33A into a voltage command value Vd* by PI control (i.e., proportional integral control) and outputs the voltage command value Vd* to the two-phase/three-phase conversion unit 35.

The PI control unit 34B converts the q-axis current command value Iq*' inputted from the subtraction unit 33B into a voltage command value Vq* by PI control and outputs the voltage command value Vq* to the two-phase/three-phase conversion unit 35.

The two-phase/three-phase conversion unit 35 converts the voltage command value Vd* inputted from the PI control unit 34A and the voltage command value Vq* inputted from the PI control unit 34B into three-phase voltage command values Vu*, Vv* and Vw* based on the power factor control signal Pc inputted from the power factor control apparatus 40. Then, the two-phase/three-phase conversion unit 35 outputs the three-phase voltage command values Vu*, Vv* and Vw* to the PWM signal generation unit 36.

The PWM signal generation unit 36 generates, based on the voltage command values Vu*, Vv* and Vw* inputted from the two-phase/three-phase conversion unit 35, the switching control signals Su, Sv and Sw for controlling the switching of the inverter 20. Then, the PWM signal generation unit 36 outputs the switching control signals Su, Sv and Sw to the inverter 20. In addition, the switching control signals Su, Sv and Sw are Pulse Width Modulation (PWM) signals.

Moreover, as shown in FIG. 2, the power factor control apparatus 40 includes a current command value acquisition unit 41, a correction amount calculation unit 42, a phase detection unit 43, and a correction processing unit 44.

The current command value acquisition unit 41 is identical to the current command value acquisition unit 31 of the inverter control apparatus 30. The current command value acquisition unit 41 is provided with map data 41A that is identical to the map data 31A. The map data 41A is an example of second map data. In addition, the map data 41A may be rewritable from an external apparatus.

The correction amount calculation unit 42 calculates a phase correction amount $\phi$ based on the d-axis current command value Id* and the q-axis current command value Iq*, both of which are inputted from the current command value acquisition unit 41, and the power factor command value PF inputted from the superordinate apparatus (not shown). As described above, the power factor command value PF is a target power factor of the electric power outputted by the power grid apparatus 70.

Here, the power factor denotes the ratio of the active power (i.e., $P = V{\times}I{\times}\cos\theta$) to the apparent power (i.e., $S = V{\times}I$), and is represented by $\cos\theta$ using the phase difference $\theta$ between the current and the voltage. That is, the power factor changes with change in the directions of the vectors on the d-axis and the q-axis. This means that the effective power factor can be controlled by shifting the phases of the signals outputted from the three-phase/two-phase converter 32 and the two-phase/three-phase converter 35.

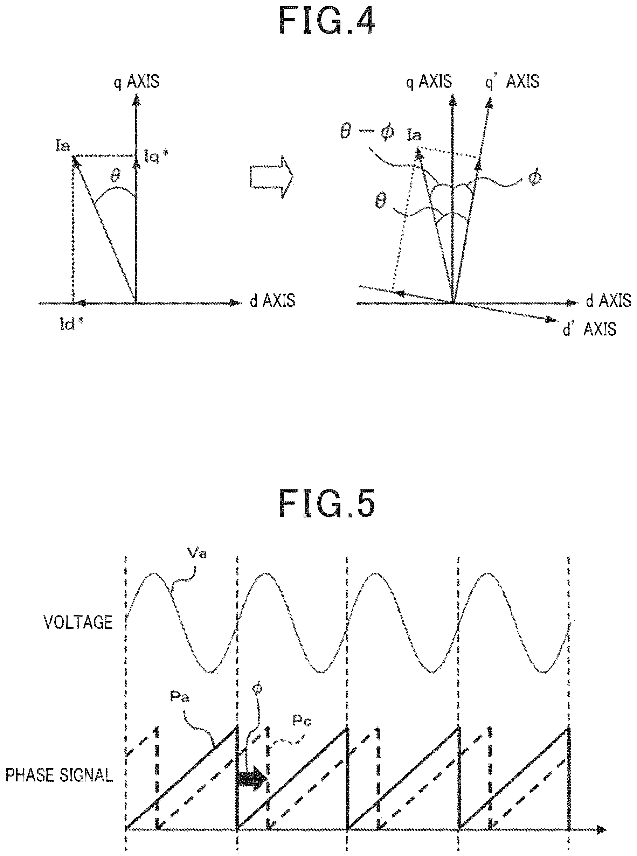

Referring to FIG. 4, let $\theta$ be the phase difference between the current and the voltage (i.e., let $\cos\theta$ be the power factor) during normal drive of the inverter 20; let $\theta'$ be the phase difference between the current and the voltage when the inverter 20 is driven by the power factor command value PF (i.e., let $\cos\theta'$ be the power factor command value PF); and let $\phi$ be the phase correction amount. Then, the phase correction amount $\phi$ is expressed by the following Equation (1).

$$\phi = \theta - \theta'$$
$$= \theta - (\theta - \phi)$$
$$= \arccos(Iq/Ia) - \arccos(PF{\times}Ia)/Ia \qquad (1)$$

In addition, $Ia = (Id^{*2} + Iq^{*2})^{1/2}$.

Therefore, the correction amount calculation unit 42 first calculates Ia based on the d-axis current command value Id* and the q-axis current command value Iq*, and then calculates the phase correction amount $\phi$ by substituting the calculated Ia and the power factor command value PF into the above Equation (1).

The phase detection unit 43 detects the phase difference $\theta$ between the current value Iw detected by the current sensor 21w and the voltage value Va detected by the voltage sensor 22, and outputs the detected phase difference $\theta$ to the correction processing unit 44.

The correction processing unit 44 generates the power factor control signal Pc based on the phase correction amount $\phi$ calculated by the correction amount calculation unit 42 and the phase difference $\theta$ detected by the phase detection unit 43, and outputs the generated power factor control signal Pc to both the three-phase/two-phase conversion unit 32 and the two-phase/three-phase conversion unit 35. The inverter control apparatus 30 was originally used to drive a motor of a vehicle; and both the three-phase/two-phase conversion unit 32 and the two-phase/three-phase conversion unit 35 were originally designed to have the rotation angle of the motor inputted thereto as phase information. However, when the inverter control apparatus 30 is reused for the power grid apparatus 70, it can no longer have the rotation angle of the motor inputted thereto. Therefore, the power factor is controlled by inputting the power factor control signal Pc, instead of the rotation angle of the motor, to the inverter control apparatus 30 as the phase information.

For example, as shown in FIG. 5, the power factor control signal Pc is a phase signal that is retarded by the phase correction amount $\phi$ with respect to a phase signal Pa of a voltage waveform of the voltage value Va detected by the voltage sensor 22. Consequently, the current values Ix and Iy outputted from the three-phase/two-phase conversion unit 32 become values retarded by the phase correction amount $\phi$; and the voltage command values Vu*, Vv* and Vw* outputted from the two-phase/three-phase conversion unit 35 become values retarded by the phase correction amount $\phi$. As a result, the three-phase AC current outputted from the inverter 20 is retarded by the phase correction amount $\phi$; electric power is supplied to the power grid apparatus 70 at a power factor conforming to the power factor command value PF.

As above, in the present embodiment, the power factor control apparatus 40 outputs the power factor control signal Pc to the inverter control apparatus 30, thereby making it possible to supply electric power to the power grid apparatus 70 at a desired power factor; the power factor control signal Pc is a phase signal whose phase is retarded by the phase correction amount $\phi$ that is calculated based on the required output value and the power factor command value PF required by the power grid apparatus 70. Consequently, it becomes possible to reuse the existing inverter 20, which was originally used to drive a motor of a vehicle, for the power grid apparatus 70. Moreover, it is only necessary to add the power factor control apparatus 40 to the inverter control system 10; that is, it is unnecessary to change the inverter 20 and the inverter control apparatus 30.

[Second Embodiment]

Next, the second embodiment will be described. It should be noted that: parts in the second embodiment identical to those in the first embodiment are designated by the same reference signs as those in the first embodiment; and detailed explanation thereof will be omitted hereinafter.

In the second embodiment, the power factor control apparatus 40 generates the power factor control signal Pc by software processes and outputs the generated power factor control signal Pc to the inverter control apparatus 30.

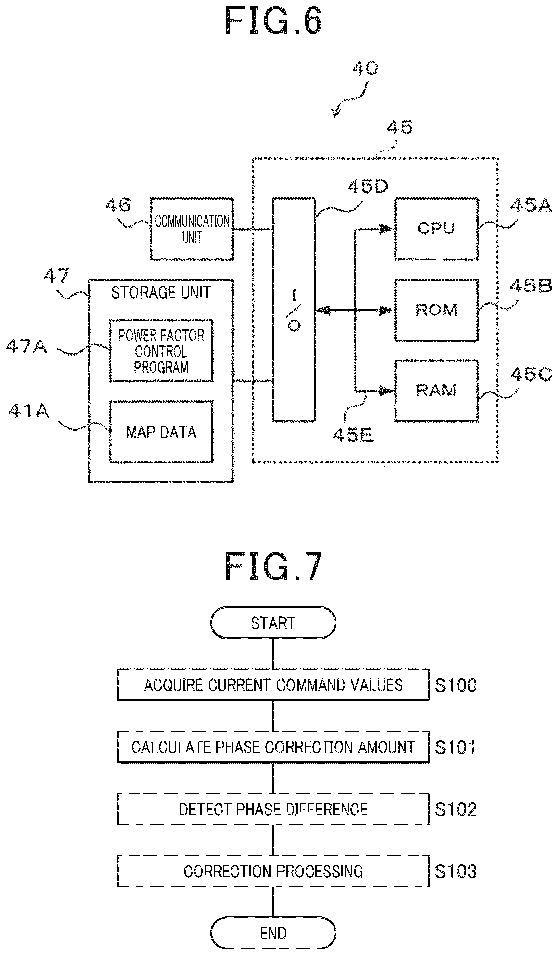

FIG. 6 is a block diagram illustrating the hardware configuration of the power factor control apparatus 40 according to the second embodiment. As shown in FIG. 6, in the present embodiment, the power factor control apparatus 40 includes a controller 45.

The controller 45 includes a CPU (Central Processing Unit) 45A, a ROM (Read Only Memory) 45B, a RAM (Random Access Memory) 45C, and an I/O (Input/Output) interface 45D. The CPU 45A, the ROM 45B, the RAM 45C and the I/O interface 45D are connected with each other via buses 45E. The buses 45E include a control bus, an address bus and a data bus. Moreover, a communication unit 46 and a storage unit 47 are connected with the I/O interface 45D.

The communication unit 46 is an interface for performing data communication with the inverter control apparatus 30 and the like.

The storage unit 47 is constituted of, for example, by a nonvolatile memory. As shown in FIG. 6, the storage unit 47 has both a power factor control program 47A and map data 41A stored therein.

The CPU 45A is an example of a processor. The term "processor" used here denotes a processor in a broad sense, and encompasses a general-purpose processor (e.g., a CPU) and a dedicated processor (e.g., a GPU (Graphics Processing Unit), an ASIC (Application Specific Integrated Circuit), an FPGA (Field Programmable Gate Array), a programmable logic device, etc.).

The power factor control program 47A may be suitably installed in the power factor control apparatus 40 by being stored in a nonvolatile and non-transitory recording medium or by being distributed via a network.

Examples of nonvolatile and non-transitory recording media include a CD-ROM (Compact Disc Read Only Memory), an optical magnetic disk, an HDD (Hard Disk Drive), a DVD-ROM (Digital Versatile Disc Read Only Memory), a flash memory, a memory card, etc.

Next, a flowchart of a power factor control process executed by the CPU 45A of the power factor control apparatus 40 will be described with reference to FIG. 7. The CPU 45A executes the power factor control process shown in FIG. 7 by loading and running the power factor control program 47A stored in the storage unit 47. In addition, the power factor control process shown in FIG. 7 is executed repeatedly.

In step S100, the CPU 45A, which serves as the current command value acquisition unit 41, acquires the d-axis current command value Id* and the q-axis current command value Iq*, both of which correspond to the required output value inputted from the superordinate apparatus (not shown), by referring to the map data 41A.

In step S101, the CPU 45A, which also serves as the correction amount calculation unit 42, calculates the phase correction amount $\phi$ based on the d-axis current command value Id* and the q-axis current command value Iq*, both of which are acquired in step S100, and the power factor command value PF inputted from the superordinate apparatus (not shown).

In step S102, the CPU 45A, which also serves as the phase detection unit 43, detects the phase difference $\theta$ between the current value Iw detected by the current sensor 21w and the voltage value Va detected by the voltage sensor 22.

In step S103, the CPU 45A, which also serves as the correction processing unit 44, generates the power factor control signal Pc based on the phase correction amount $\phi$ calculated in step S101 and the phase difference $\theta$ detected in step S102, and outputs the generated power factor control signal Pc to both the three-phase/two-phase conversion unit 32 and the two-phase/three-phase conversion unit 35.

As above, in the present embodiment, the CPU 45A of the power factor control apparatus 40 executes the power factor control process by loading and running the power factor control program 47A stored in the storage unit 47. Consequently, the power factor control signal Pc is outputted to the inverter control apparatus 30, thereby making it possible to supply electric power to the power grid apparatus 70 at a desired power factor; the power factor control signal Pc is a phase signal whose phase is retarded by the phase correction amount $\phi$ that is calculated based on the required output value and the power factor command value PF required by the power grid apparatus 70.

[Third Embodiment]

Next, the third embodiment will be described. It should be noted that: parts in the third embodiment identical to those in the first embodiment are designated by the same reference signs as those in the first embodiment; and detailed explanation thereof will be omitted hereinafter.

In the first embodiment, the power factor control apparatus 40 includes the current command value acquisition unit 41 that is identical to the current command value acquisition unit 31 of the inverter control apparatus 30. However, since the inverter control apparatus 30 was originally used to drive a motor of a vehicle, the contents of the map data 31A may possibly be unknown.

**EP 4 661 277 A1**

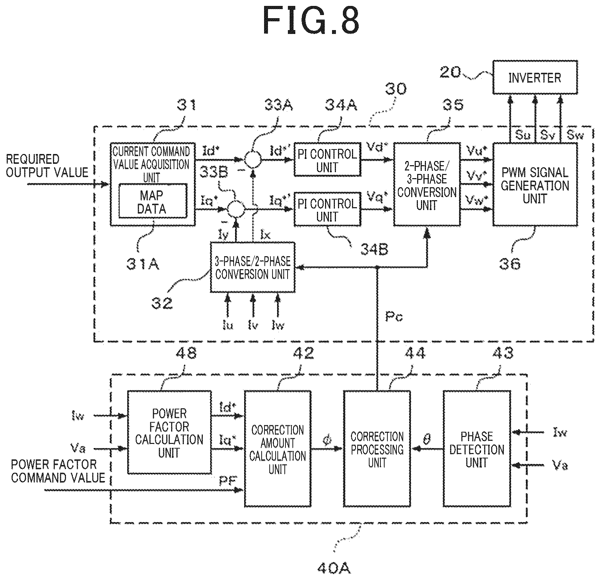

In view of the above, as shown in FIG. 8, a power factor control apparatus 40A according to the present embodiment includes a power factor calculation unit 48 instead of the current command value acquisition unit 41, as compared with the power factor control apparatus 40 shown in FIG. 2. The rest of the configuration is the same as that of the power factor control apparatus 40 shown in FIG. 2; therefore, explanation thereof will be omitted hereinafter.

In the present embodiment, to the power factor calculation unit 48, there are inputted the voltage value Va detected by the voltage sensor 22 and at least one of the current values Iu, Iv and Iw detected respectively by the current sensors 21u, 21v and 21w. The power factor calculation unit 48 first calculates the power factor cosθ based on the voltage value Va and the at least one of the current values Iu, Iv and Iw inputted thereto, and then calculates the d-axis current command value Id* and the q-axis current command value Iq* based on the calculated power factor cosθ.

As above, in the present embodiment, the power factor calculation unit 48 first calculates the power factor cosθ based on the voltage value Va and at least one of the current values Iu, Iv and Iw, and then calculates the d-axis current command value Id* and the q-axis current command value Iq* based on the calculated power factor cosθ. Therefore, even when the contents of the map data 31A of the inverter control apparatus 30 are unknown, it is still possible for the correction amount calculation unit 42 to calculate the phase correction amount φ.

[Fourth Embodiment]

Next, the fourth embodiment will be described. It should be noted that: parts in the fourth embodiment identical to those in the first embodiment are designated by the same reference signs as those in the first embodiment; and detailed explanation thereof will be omitted hereinafter.

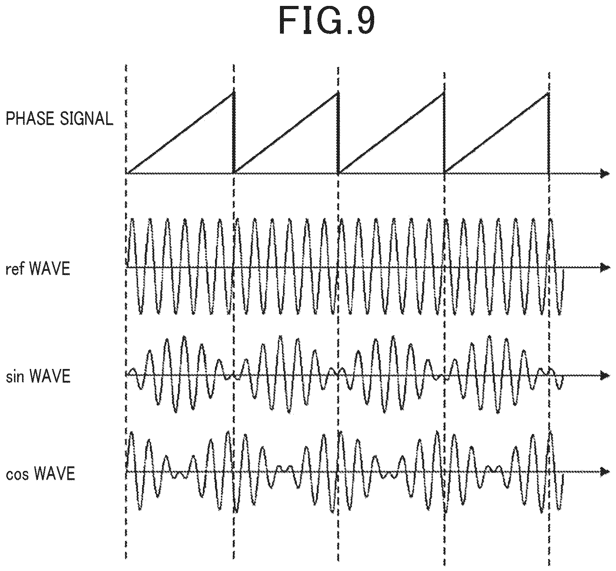

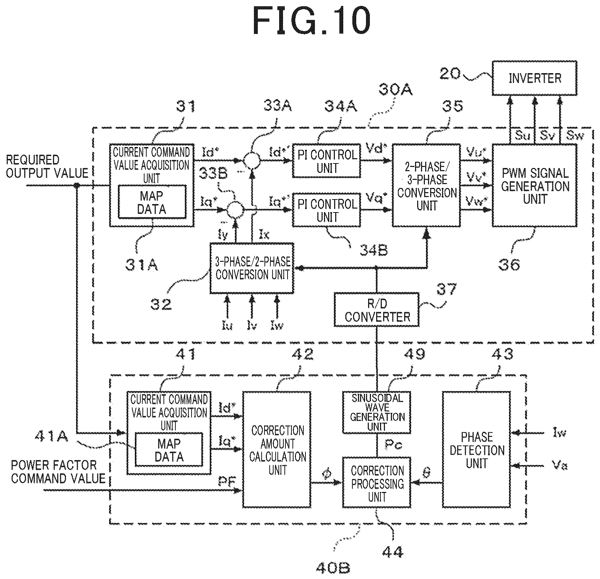

In the present embodiment, the phase information inputted to the inverter 20 is resolver signals that represent the rotation angle of the motor for driving the vehicle as two-phase sinusoidal signals using magnetic characteristics, i.e., as a sin wave and a cos wave. Moreover, as shown in FIG. 10, an inverter control apparatus 30A according to the present embodiment includes an R/D converter 37 that calculates digital data of the phase angle based on two input signals of the sin wave and the cos wave. FIG. 9 shows an example of the waveforms of a phase signal inputted to the inverter control apparatus 30A, a ref wave that is a sinusoidal wave inputted to a resolver, the sin wave that is obtained by multiplying the ref wave by the sine component of the phase angle and outputted from the resolver, and the cos wave that is obtained by multiplying the ref wave by the cosine component of the phase angle and outputted from the resolver.

As shown in FIG. 10, a power factor control apparatus 40B according to the present embodiment differs from the power factor control apparatus 40 shown in FIG. 2 in that the power factor control apparatus 40B includes a sinusoidal wave generation unit 49. The rest of the configuration is the same as that shown in FIG. 2; therefore, explanation thereof will be omitted hereinafter.

The sinusoidal wave generation unit 49 converts the power factor control signal Pc outputted from the correction processing unit 44, which is a phase signal whose phase is retarded by the phase correction amount φ, into the two-phase sinusoidal signals (i.e., the sin wave and the cos wave) and outputs the two-phase sinusoidal signals to the R/D converter 37 of the inverter control apparatus 30A.

As above, in the present embodiment, even when the phase information inputted to the inverter 20 is assumed to be output signals from the resolver that was originally installed in the motor, it is still possible to supply electric power to the power grid apparatus 70 at a desired power factor.

[Fifth Embodiment]

Next, the fifth embodiment will be described. It should be noted that: parts in the fifth embodiment identical to those in the fourth embodiment are designated by the same reference signs as those in the fourth embodiment; and detailed explanation thereof will be omitted hereinafter.

In the case of the inverter 20 being used as a grid-connected inverter, when an abnormality has occurred in the power grid apparatus 70 and thus the superordinate grid has been disconnected from the inverter 20, for safety reasons, it is necessary to detect the disconnection operation of the superordinate grid and stop operation of the inverter 20 so as to prevent the inverter 20 from operating in an isolated manner (i.e., to provide isolated-operation prevention function).

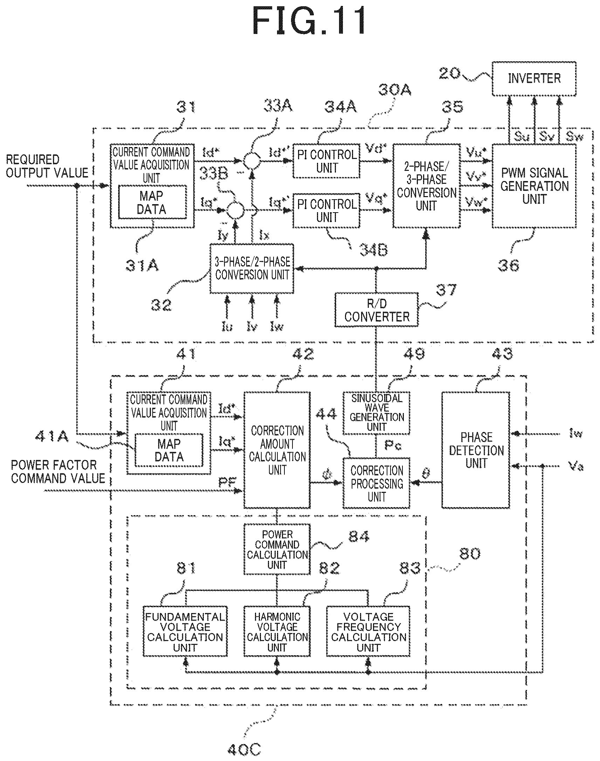

As shown in FIG. 11, a power factor control apparatus 40C according to the present embodiment includes a voltage fluctuation detection unit 80 for performing a function of preventing isolated operation of the inverter 20.

Moreover, as shown in FIG. 11, the voltage fluctuation detection unit 80 includes a fundamental voltage calculation unit 81, a harmonic voltage calculation unit 82, a voltage frequency calculation unit 83, and a power command calculation unit 84.

The fundamental voltage calculation unit 81 calculates a fundamental component of the voltage value Va detected by the voltage sensor 22.

The harmonic voltage calculation unit 82 calculates a harmonic component of the voltage value Va detected by the voltage sensor 22.

The voltage frequency calculation unit 83 calculates a frequency component of the voltage value Va detected by the voltage sensor 22.

The power command calculation unit 84 determines whether the superordinate grid has been disconnected from the inverter 20 by determining whether the degree of change in at least one of the fundamental component of the voltage value Va calculated by the fundamental voltage calculation unit 81, the harmonic component of the voltage value Va calculated by the harmonic voltage calculation unit 82, and the frequency component of the voltage value Va calculated by the voltage frequency calculation unit 83 is higher than or equal to a predetermined threshold value. Moreover, the power command calculation unit 84 calculates, based on the degree of change in at least one of the fundamental component of the voltage value Va, the harmonic component of the voltage value Va, and the frequency component of the voltage value Va, a power command value that increases the reactive power and outputs the calculated power command value to the correction amount calculation unit 42. Consequently, a sin wave and a cos wave that increase the reactive power are outputted from the sinusoidal wave generation unit 49, thereby improving the accuracy of detecting such an abnormality that the superordinate grid has been disconnected from the inverter 20 and efficiently preventing isolated operation of the inverter 20.

In addition, the sinusoidal wave generation unit 49 may output a sin wave and a cos wave which include a predetermined low-frequency component, thereby making it possible to facilitate detection of minute fluctuations in the voltage value Va.

[Examples]

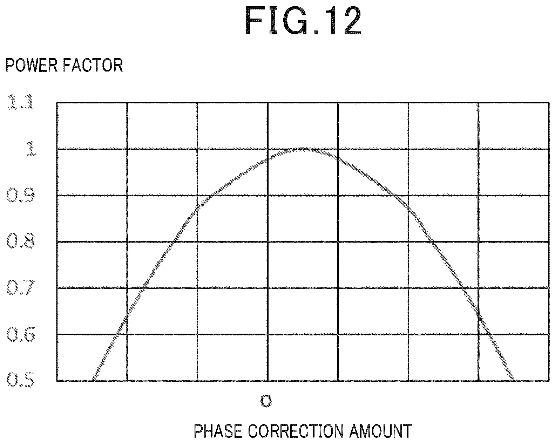

FIG. 12 illustrates the relationship between the phase correction amount and the power factor of electric power outputted from the inverter 20 under the power factor control by the power factor control apparatus 40 based on the power factor command value PF inputted to the power factor control apparatus 40.

The present disclosure is not limited to the above-described embodiments, and various modifications and applications are possible without departing from the gist of the present disclosure.

The configuration of the inverter control system 10 described in the above embodiments is merely an example, and it goes without saying that unnecessary parts may be deleted and/or new parts may be added without departing from the gist of the present disclosure.

The flowchart of the power factor control program 47A described in the second embodiment (see FIG. 7) is also merely an example, and it goes without saying that unnecessary steps may be deleted, new steps may be added and/or the processing order may be changed without departing from the gist of the present disclosure.

The control apparatuses and the control methods described in the present disclosure may be realized by a dedicated computer that includes a processor, which is programmed to perform one or more functions embodied by a computer program, and a memory. As an alternative, the control apparatuses and the control methods described in the present disclosure may be realized by a dedicated computer that includes a processor configured with one or more dedicated hardware logic circuits. As another alternative, the control apparatuses and the control methods described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible recording medium.

The following notes summarize the technology according to the present disclosure.

[Notes]

(First Note)

A power factor control apparatus comprising:

a phase detection unit configured to detect the phase of an output signal outputted from an inverter, which was originally used to supply electric power to a first electric power supply target, to a second electric power supply target that is different from the first electric power supply target and connected with the inverter and an inverter control apparatus for controlling the inverter;

a correction amount calculation unit configured to calculate a phase correction amount based on a power factor command value that is a power factor required by the second electric power supply target; and

a correction processing unit configured to generate, based on the phase detected by the phase detection unit and the phase correction amount calculated by the correction amount calculation unit, a power factor control signal for controlling the power factor of electric power supplied to the second electric power supply target and output the generated power factor control signal to the inverter control apparatus.

(Second Note)

The power factor control apparatus according to the first note, wherein:

the inverter control apparatus has stored therein first map data indicating the correspondence relationship between a required output value of the first electric power supply target and current command values for controlling the inverter; the power factor control apparatus further comprises a current command value acquisition unit having stored therein second map data identical to the first map data and configured to acquire, from the second map data, current command values corresponding to a value obtained by converting a required output value of the second electric power supply target into the required output value of the first electric power supply target; and the correction amount calculation unit is configured to calculate the phase correction amount based on the current command values acquired by the current command value acquisition unit and the power factor command value.

(Third Note)

The power factor control apparatus according to the second note, wherein both the first map data and the second map data are rewritable from an external apparatus.

(Fourth Note)

The power factor control apparatus according to the first note, further comprising a power factor calculation unit configured to calculate a power factor based on the phases of a voltage and current outputted from the inverter, wherein the correction amount calculation unit is configured to calculate the phase correction amount based on the power factor calculated by the power factor calculation unit and the power factor command value.

(Fifth Note)

The power factor control apparatus according to any one of the first to fourth notes, wherein:

the first electric power supply target is a motor; the inverter control apparatus is configured to have two-phase sinusoidal signals, which represent the rotation angle of the motor, inputted thereto; and the power factor control apparatus further comprises a sinusoidal wave generation unit configured to convert the power factor control signal generated by the correction processing unit into the two-phase sinusoidal signals and output the two-phase sinusoidal signals to the inverter control apparatus.

(Sixth Note)

The power factor control apparatus according to the fifth note, wherein the sinusoidal wave generation unit is configured to generate the two-phase sinusoidal signals which include a predetermined low-frequency component.

(Seventh Note)

The power factor control apparatus according to any one of the first to sixth notes, further comprising:

at least one of a fundamental voltage calculation unit configured to calculate a fundamental component of a voltage outputted from the inverter, a harmonic voltage calculation unit configured to calculate a harmonic component of the voltage, and a voltage frequency calculation unit configured to calculate a frequency component of the voltage; and a power command calculation unit configured to (i) determine whether the second electric power supply target has been disconnected from the inverter by determining whether the degree of change in at least one of the fundamental component, the harmonic component, and the frequency component is higher than or equal to a predetermined threshold value and (ii) calculate, when it is determined that the second electric power supply target has been disconnected, a power command value that increases reactive power and output the calculated power command value to the correction amount calculation unit so as to prevent isolated operation of the inverter.

(Eighth Note)

The power factor control apparatus according to the fifth note, wherein the motor is a motor for driving a vehicle.

(Ninth Note)

The power factor control apparatus according to any one of the first to eighth notes, wherein the second electric power supply target is a power grid apparatus.

(Tenth Note)

A power factor control method comprising the following steps executed by at least one processor:

detecting the phase of an output signal outputted from an inverter, which was originally used to supply electric power to a first electric power supply target, to a second electric power supply target that is different from the first electric power supply target and connected with the inverter and an inverter control apparatus for controlling the inverter; calculating a phase correction amount based on a power factor command value that is a power factor required by the second electric power supply target; and generating, based on the detected phase and the calculated phase correction amount, a power factor control signal for controlling the power factor of electric power supplied to the second electric power supply target and outputting the generated power factor control signal to the inverter control apparatus.

(Eleventh Note)

A power factor control program configured to cause at least one processor to execute processes comprising:

detecting the phase of an output signal outputted from an inverter, which was originally used to supply electric power to a first electric power supply target, to a second electric power supply target that is different from the first electric power supply target and connected with the inverter and an inverter control apparatus for controlling the inverter; calculating a phase correction amount based on a power factor command value that is a power factor required by the second electric power supply target; and generating, based on the detected phase and the calculated phase correction amount, a power factor control signal for controlling the power factor of electric power supplied to the second electric power supply target and outputting the generated power factor control signal to the inverter control apparatus.

**Claims**

1. A power factor control apparatus (40) comprising:

a phase detection unit (43) configured to detect the phase of an output signal outputted from an inverter (20), which was originally used to supply electric power to a first electric power supply target, to a second electric power supply target (70) that is different from the first electric power supply target and connected with the inverter and an inverter control apparatus (30) for controlling the inverter; a correction amount calculation unit (42) configured to calculate a phase correction amount based on a power factor command value that is a power factor required by the second electric power supply target; and a correction processing unit (44) configured to generate, based on the phase detected by the phase detection unit and the phase correction amount calculated by the correction amount calculation unit, a power factor control signal for controlling the power factor of electric power supplied to the second electric power supply target and output the generated power factor control signal to the inverter control apparatus.

2. The power factor control apparatus as set forth in Claim 1, wherein:

the inverter control apparatus has stored therein first map data (31A) indicating the correspondence relationship between a required output value of the first electric power supply target and current command values for controlling the inverter; the power factor control apparatus further comprises a current command value acquisition unit (41) having stored therein second map data (41A) identical to the first map data and configured to acquire, from the second map data, current command values corresponding to a value obtained by converting a required output value of the second electric power supply target into the required output value of the first electric power supply target; and the correction amount calculation unit is configured to calculate the phase correction amount based on the current command values acquired by the current command value acquisition unit and the power factor command value.

3. The power factor control apparatus as set forth in Claim 2, wherein both the first map data and the second map data are rewritable from an external apparatus.

4. The power factor control apparatus as set forth in Claim 1, further comprising a power factor calculation unit (48) configured to calculate a power factor based on the phases of a voltage and current outputted from the inverter, wherein the correction amount calculation unit is configured to calculate the phase correction amount based on the power factor calculated by the power factor calculation unit and the power factor command value.

5. The power factor control apparatus as set forth in Claim 1, wherein:

   the first electric power supply target is a motor;
   the inverter control apparatus is configured to have two-phase sinusoidal signals, which represent the rotation angle of the motor, inputted thereto; and
   the power factor control apparatus further comprises a sinusoidal wave generation unit (49) configured to convert the power factor control signal generated by the correction processing unit into the two-phase sinusoidal signals and output the two-phase sinusoidal signals to the inverter control apparatus.

6. The power factor control apparatus as set forth in Claim 5, wherein the sinusoidal wave generation unit is configured to generate the two-phase sinusoidal signals which include a predetermined low-frequency component.

7. The power factor control apparatus as set forth in Claim 1, further comprising:

   at least one of a fundamental voltage calculation unit (81) configured to calculate a fundamental component of a voltage outputted from the inverter, a harmonic voltage calculation unit (82) configured to calculate a harmonic component of the voltage, and a voltage frequency calculation unit (83) configured to calculate a frequency component of the voltage; and
   a power command calculation unit (84) configured to (i) determine whether the second electric power supply target has been disconnected from the inverter by determining whether the degree of change in at least one of the fundamental component, the harmonic component, and the frequency component is higher than or equal to a predetermined threshold value and (ii) calculate, when it is determined that the second electric power supply target has been disconnected, a power command value that increases reactive power and output the calculated power command value to the correction amount calculation unit so as to prevent isolated operation of the inverter.

8. The power factor control apparatus as set forth in Claim 5, wherein the motor is a motor for driving a vehicle.

9. The power factor control apparatus as set forth in any one of Claims 1 to 8, wherein the second electric power supply target is a power grid apparatus.

10. A power factor control method comprising the following steps executed by at least one processor:

    detecting the phase of an output signal outputted from an inverter, which was originally used to supply electric power to a first electric power supply target, to a second electric power supply target that is different from the first electric power supply target and connected with the inverter and an inverter control apparatus for controlling the inverter;
    calculating a phase correction amount based on a power factor command value that is a power factor required by the second electric power supply target; and
    generating, based on the detected phase and the calculated phase correction amount, a power factor control signal for controlling the power factor of electric power supplied to the second electric power supply target and outputting the generated power factor control signal to the inverter control apparatus.

11. A power factor control program configured to cause at least one processor to execute processes comprising:

    detecting the phase of an output signal outputted from an inverter, which was originally used to supply electric power to a first electric power supply target, to a second electric power supply target that is different from the first electric power supply target and connected with the inverter and an inverter control apparatus for controlling the inverter;
    calculating a phase correction amount based on a power factor command value that is a power factor required by the second electric power supply target; and

generating, based on the detected phase and the calculated phase correction amount, a power factor control signal for controlling the power factor of electric power supplied to the second electric power supply target and outputting the generated power factor control signal to the inverter control apparatus.

# FIG.1

# FIG.2

# FIG.3

# FIG.4

# FIG.5

# FIG.6

# FIG.7

# FIG.8

# FIG.9

PHASE SIGNAL

ref WAVE

sin WAVE

cos WAVE

# FIG.10

# FIG.11

# FIG.12

POWER FACTOR

PHASE CORRECTION AMOUNT

## INTERNATIONAL SEARCH REPORT

| International application No. |
| :--- |
| **PCT/JP2024/001135** |

**A.  CLASSIFICATION OF SUBJECT MATTER**

*H02M 7/48*(2007.01)i; *H02P 27/06*(2006.01)i
FI:   H02M7/48 R; H02P27/06 ZHV

According to International Patent Classification (IPC) or to both national classification and IPC

**B.  FIELDS SEARCHED**

Minimum documentation searched (classification system followed by classification symbols)

H02M7/48; H02P27/06; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| :---: | :--- | :---: |
| A | JP 2022-146409 A (TOYOTA JIDOSHA KABUSHIKI KAISHA) 05 October 2022 (2022-10-05)<br>    paragraphs [0020]-[0052], [0061], fig. 1, 4-6 | 1-11 |
| A | JP 2022-139804 A (TOYOTA JIDOSHA KABUSHIKI KAISHA) 26 September 2022 (2022-09-26)<br>    paragraphs [0015]-[0043], fig. 1-4 | 1-11 |
| A | JP 2013-038844 A (DAIHEN CORP.) 21 February 2013 (2013-02-21)<br>    paragraphs [0050]-[0078], fig. 1-5 | 1-11 |
| A | JP 2015-220835 A (SHARP KABUSHIKI KAISHA) 07 December 2015 (2015-12-07)<br>    paragraphs [0017]-[0043], fig. 1,6-7 | 1-11 |

☐ Further documents are listed in the continuation of Box C.          ☑ See patent family annex.

\*    Special categories of cited documents:
"A"  document defining the general state of the art which is not considered to be of particular relevance
"D"  document cited by the applicant in the international application
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| :--- | :--- |
| **22 March 2024** | **02 April 2024** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/001135**

| Patent document cited in search report | | | Publication date (day/month/year) | Patent family member(s) | | | Publication date (day/month/year) |
|---|---|---|---|---|---|---|---|
| JP | 2022-146409 | A | 05 October 2022 | US 2022/0302866 A1 paragraphs [0026]-[0056], [0065], fig. 1, 4-6 DE 102022106337 A1 CN 115117938 A | | | |
| JP | 2022-139804 | A | 26 September 2022 | US 2022/0294464 A1 paragraphs [0020]-[0048], fig. 1-4 DE 102022105632 A1 CN 115085249 A | | | |
| JP | 2013-038844 | A | 21 February 2013 | (Family: none) | | | |
| JP | 2015-220835 | A | 07 December 2015 | (Family: none) | | | |

Form PCT/ISA/210 (patent family annex) (July 2022)

**EP 4 661 277 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023015667 A
- JP 2009044846 A
- JP 2008199868 A
- JP 2012080776 A